**Europäisches Patentamt**

**European Patent Office**

**Office européen des brevets**

(19)

(11) Veröffentlichungsnummer: **0 055 845**

**A2**

(12) # EUROPÄISCHE PATENTANMELDUNG

(21) Anmeldenummer: **81110706.9**

(22) Anmeldetag: **23.12.81**

(51) Int. Cl.³: **B 23 P 15/00**

(30) Priorität: **23.12.80 DK 5493/80**

(43) Veröffentlichungstag der Anmeldung:
**14.07.82 Patentblatt 82/28**

(84) Benannte Vertragsstaaten:
**AT BE CH DE FR GB IT LI NL SE**

(71) Anmelder: **Bent Storm Sørensen Holding Aps**
**Hobrovej 317**
**DK-9200 Aalborg SV(DK)**

(72) Erfinder: **Sørensen, Bent Storm**
**Hobrovej 317**
**DK-9200 Aalborg SV(DK)**

(72) Erfinder: **Sørensen, Niels**
**Klaestrupholmsvej 22**
**9230 Svenstrup J(DK)**

(74) Vertreter: **Patentanwälte Wenzel & Kalkoff**
**Grubes Allee 26 Postfach 730466**
**D-2000 Hamburg 73(DE)**

(54) Verfahren zur Herstellung von hydraulischen Teleskopzylindern.

(57) Bei der Herstellung hydraulischer Teleskopzylinder werden die einzelnen Rohre von vorgefertigten, kaltgezogenen, innen gehonten und außen rundgeschliffenen Stahlrohren abgeschnitten. Die Rohrstücke erhalten darauf an einem Ende einen äußeren Ring (17) und am anderen Ende einen inneren Ring (16). Diese Ringe sollen verhindern, daß die Rohrstücke im fertigen Teleskopzylinder auseinander gezogen werden, und werden derart befestigt, daß die erforderliche Erwärmung so gering ist, daß die Rohre nicht deformiert werden, z.B. durch Kleben oder Hartlöten, und daß keine Nachbehandlung der Stahlrohre nötig ist. Wenn vorgefertigte Ringe mit Ausdrehungen für Schließ-, Abstreif- und Dichtungsringe verwendet werden, können die Rohrstücke unmittelbar nach dem Befestigen der Ringe zu einem Teleskopzylinder zusammengefügt werden. Gegenüber herkömmlichen Herstellungsverfahren ist dieses Verfahren wirtschaftlicher bezüglich Arbeitszeit und Materialien, und es erfordert keine Sondermaschinen.

**Fig 1**

Bent Storm Sørensen Holding ApS, Hobrovej 317,
DK-9200 Aalborg SV, Dänemark

Verfahren zur Herstellung von hydraulischen Teleskopzylindern

Die Erfindung betrifft ein Verfahren zur Herstellung von hydraulischen Teleskopzylindern, die mindestens zwei teleskopisch
in einander gelagerte Zylinderrohre umfassen.

Um die Reibung zu vermindern, sind die Zylinderrohre an einem
Ende mit einem äußeren Ring oder Flansch, dessen Durchmesser
dem inneren Durchmesser des äußeren Rohrs entspricht, und mit
einem inneren Ring oder Flansch am anderen Ende, dessen Innendurchmesser dem des äußeren Rohrs entspricht, versehen.

Bisher werden Teleskopzylinder nach den folgenden zwei Verfahren hergestellt:

Nach dem einen Verfahren wird der Teleskopzylinder, von einem
Standardrohr ausgehend, mit einem inneren Durchmesser hergestellt, der so dicht wie überhaupt möglich am Fertigmaß liegt,
und der äußere Durchmesser übersteigt den Durchmesser des
äußeren Kragens, der Anschlag und Führung bilden soll. Am Ende
des Rohres ist ein kurzes Rohrstück mit demgleichen Außendurchmesser wie dem des ersten Rohres, aber mit größerer Wandstärke,
anzuschweißen, so daß er einen inneren Kragen bildet. Das Rohrstück bearbeitet man innen für eine Stopfbuchse und einen Abstreifring. Das erste Rohr wird danach innen ausgebohrt und
das zusammengefügte Rohr außen bis an den äußeren Kragen abgedreht, worauf die Oberfläche geschliffen wird. Damit handelt
es sich um ein sehr arbeitsintensives Verfahren, das zugleich
einen großen Materialverlust mit sich bringt.

Die zweite Methode, die man für die Herstellung von Teleskopzylindern anwenden kann, ist das Gesenkschmieden der Rohre; das
aber erfordert Sonderausrüstungen, und damit werden die Zylinder sehr teuer. Gesenkgeschmiedete Rohre sind als Halbfertigprodukte von speziellen Herstellern käuflich beziehbar; die Fertigbearbeitung ist aber immer noch recht zeitraubend und erfordert spezielle Bohr- und Schleifmaschinen, deren Beschaffung und Unterhaltung nur für die wirklich großen Werke erschwinglich und ökonomisch sind.

Es ist bekannt, daß man die Reibung zwischen dem inneren Kragen und dem Rohr, auf dem er gleitet, vermindern kann, indem man diesen Kragen mit einer Verkleidung aus Messing oder Bronze in Form eines Ringes ausstattet, der auf den Kragen aufgelötet und darauf auf Maß abgedreht und geschliffen wird.

Statt Teleskopzylinder aus speziellen Halbfertigprodukten oder aus dickwandigen Rohren mit angeschweißten Rohrstücken nach dem vorstehend beschriebenen Verfahren herzustellen, gibt es die Möglichkeit, einen Ring aus Gußeisen oder Lagerbronze in das Teleskoprohr einzupressen oder festzulöten, wie es in der DE-OS 2 004 117 beschrieben ist; darin ist aber keine Anweisung betreffs der Bearbeitung des Rohres vor dem Einpressen oder Auflöten der Ringe gegeben, da die Nachteile einer solchen Herstellungsmethode so beachtlich und schwerwiegend sind, daß eine Verwendung von losen Füh-rungsringen, die in Rillen oder Nuten angebracht werden, vorzuziehen ist.

Diese Herstellungsmethode ist übrigens in der Patentliteratur wohlbekannt. Sie hat aber keine praktische Bedeutung erlangt, weil der angebliche Vorteil, daß lose Ringe im Falle der Beschädigung einfach auszuwechseln sind, keine Rolle spielt, da eine Zerstörung von Teleskoprohren sozusagen in der Regel immer durch ein Aufreiben der geschliffenen und verchromten Zylinderflächen der Teleskoprohre erfolgt, so daß das ganze Rohr ersetzt werden muß.

Aufgabe der Erfindung ist es deshalb, ein Verfahren zur Herstellung von Teleskopzylindern vorzuschlagen, bei dem die Bearbeitungsvorgänge und die Materialverluste auf ein Minimum
reduziert werden und keine Verwendung spezieller Werkzeugmaschinen erforderlich ist.

Diese Aufgabe wird nach der Erfindung dadurch gelöst, daß die
einzelnen Teleskoprohre aus vorgefertigten, kaltgezogenen,
innen gehonten und außen rundgeschliffenen Stahlrohren hergestellt werden, von denen Stücke der gewünschten Länge abgeschnitten werden, die darauf an einem Ende mit einem äußeren
Ring und am anderen Ende mit einem inneren Ring durch einen
Befestigungsvorgang versehen werden, bei dem die erforderliche
Erwärmung unterhalb der Deformationsgrenze der Ringe gehalten
werden kann. Die Ringe können durch Hartlöten oder Kleben befestigt werden. Keine dieser Befestigungsmethoden erfordern
eine Erwärmung, die die Gefahr einer Deformation der Rohre mit
sich bringt, und damit auch keine Notwendigkeit einer Nachbehandlung der Rohre.

Um nach der Befestigung der Ringe an den Rohrstücken eine Nachbehandlung derselben zu vermeiden, werden zweckmäßig Ringe verwendet, die vor der Befestigung mit Ausdrehungen für Abstreif-,
Schließ- und Dichtungsringe fertig bearbeitet sind. Bei diesem
Verfahren sind die Rohre in dem Augenblick vollständig fertig,
indem die Ringe befestigt worden sind, und die einzelnen Rohrstücke können unmittelbar zu einem Teleskopzylinder zusammengesetzt werden.

Die schonendste Befestigungsmethode ist ein Kleben der Ringe,
da die Aushärtungserwärmung der bekannten Klebstoffsorten, die
für ein Kleben von Metallteilen brauchbar sind, 200° C nicht
übersteigen. Im Gegensatz zu den Darlegungen in der vorerwähnten DE-OS 2 004 117 kann ein Hartlöten gefahrlos ausgeführt
werden, falls man eine gleichmäßige Erwärmung von Ring und
Rohr sicherstellt, z.B. durch Induktionserwärmung.

Das Verkleben von Metallteilen ist ein wohlbekannter Prozeß,
der wegen der Schwierigkeiten des Lötens oder Schweißens von
Aluminium in großem Maße für die Herstellung von Werkstücken
aus diesem Material verwendet wird. Es gelangt aber auch für
andere Zwecke zum Einsatz, wie es z.B. in der DE-OS 2 324 722
für die Befestigung von Ringen an der Außenseite eines Rohres
beschrieben ist. Das Kleben wurde aber früher nicht in Verbindung mit stark beanspruchten Maschinenelementen wie Teleskoprohren benutzt, weil man dafür bisher nur herkömmliche
Methoden einsetzte.

Der Ring sollte vorteilhaft aus einem Material sein, das nicht
dazu neigt, gegenüber den Stahlrohren zu fressen. In diesem Sinne
geeignete Materialien sind Lagermetalle, beispielsweise gesinterte Phosphorbronze, die wegen ihrer Porosität außerordentlich
gut geeignet ist, mit Stahlrohren verklebt zu werden.

Im folgenden werden Ausführungsbeispiele der Erfindung unter
Bezugnahme auf die schematische Zeichnung näher erläutert; es
zeigt

   Fig. 1   einen nach dem erfindungsgemäßen Verfahren hergestellten Teleskopzylinder, wobei einige der
            mittleren Rohre der Übersichtlichkeit halber weggelassen, sowie die Länge der einzelnen Rohre
            verkürzt gezeigt sind, und

   Fig. 2   das mittlere Rohr bei einer Vorstufe während
            der Herstellung in voller Länge entsprechend
            dem benutzten Maßstab.

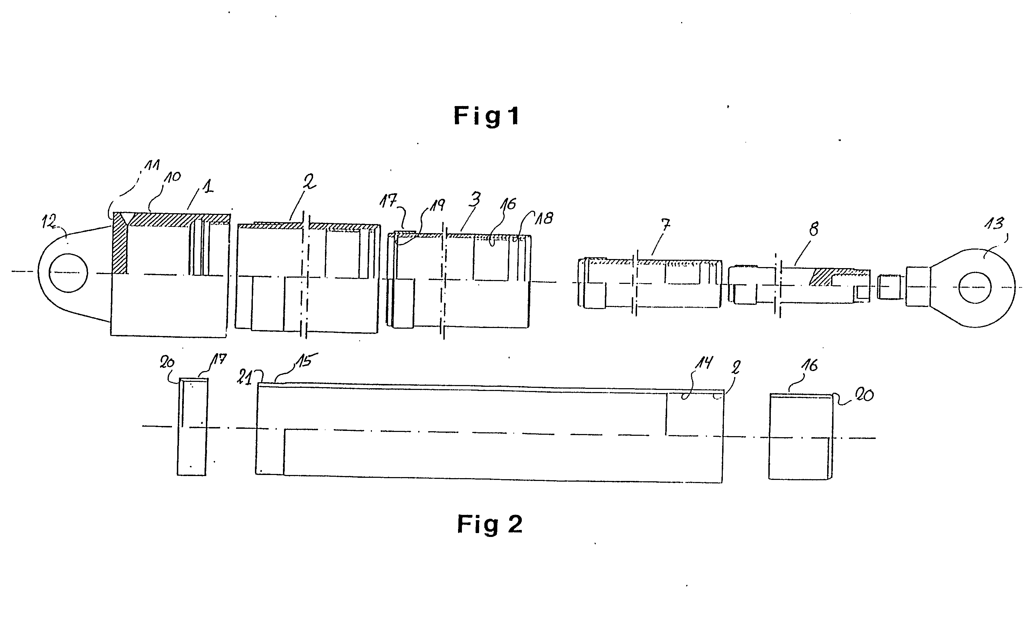

Fig. 1 zeigt einen Teleskopzylinder nach der Erfindung, der
acht Glieder 1, 2, 3,...7, 8 umfaßt; die drei mittleren sind
der besseren Übersichtlichkeit halber weggelassen, und auch
die einzelnen Glieder sind hier nicht in ihrer vollen Ausdehnung
gezeigt. Der gezeigte Teleskopzylinder umfaßt ein Bodenstück 1, das aus einem Rohrstück 10 mit einem aufgeschweißten Boden 11
besteht, und ein Auge 12, damit der Zylinder sich um eine waagerechte Achse drehen kann. Das Bodenstück 11 wird am Ende des
äußeren Rohres 2 befestigt, in dem sich fünf übrigens gleichartige Rohrstücke 3,...7 ineinander befinden. Im innersten
Rohr 7 befindet sich eine massive Stange 8, an deren äußerem
Ende ein Auge 13 befestigt wird, so daß die Teleskopstange sich
auch hier um eine waagerechte Achse drehen kann. In der Zeichnung ist die Hydraulikanlage nicht dargestellt, aber die hydraulische Flüssigkeit wird in das Bodenstück 1 hineingeleitet
und schiebt unter Druck die äußerste Stange 8 hinaus, die dann
durch den Anschlag das nächstfolgende Rohrstück 7 mit sich
nimmt und so fort. Schaltet man den Druck der hydraulischen
Flüssigkeit ab, so genügt das auf dem Teleskopzylinder ruhende
Gewicht, um die Zylinder wieder zusammenzupressen.

Für die Herstellung des Teleskopzylinders benutzt man kaltgezogene, gehonte und rundgeschliffene Stahlrohre mit Normalmaßen ab Werk. Die gewünschten Abmessungen sind auszuwählen
und zu Rohrstücken mit den gewählten Längen abzusägen.

Fig. 2 zeigt das Rohrstück des dritten Glieds im Teleskopzylinder mitsamt einem inneren und dem äußeren Ring (16 bzw. 17)
vor deren Anbringung. Die Fixierung der Ringe 16, 17 während
des Befestigungsvorganges kann, wie aus der Zeichnung hervorgeht, durch ein Abdrehen der Rohrenden 14, 15 um 0,5 - 1 mm
erreicht werden. Für die Befestigung selbst ist dieses Abdrehen ohne Bedeutung, und es ist entbehrlich, falls die Ringe 16, 17 während des Befestigungsprozesses anders festgehalten werden. Danach werden die Ringe 16, 17 angebracht; sie
sind so lang, daß sie ganz bis an die Rohrenden reichen.

Nach dem Montieren der Bronzeringe kann man in diese Nuten
für einen Abstreifring 18 und einen Schließring 19 eindrehen.
Diese Nuten kann man auch anfertigen, bevor die Ringe angebracht werden. Die Rohre 3...7 sind, von ihren Abmessungen abgesehen, gleichförmig.

Die einzelnen Teile werden folgendermaßen zu einem Zylinder zusammengesetzt: Man setzt die inneren Rohre mittels innerer Schließringe zusammen; die Ringe werden unten in dafür ausgedrehte Spuren eingebracht. Das Bodenstück 1 kann mittels Gewinde, Kleben oder Hartlöten festgesetzt werden.

Bei einer Ausführungsform, bei der der Zylinder für einen Arbeitsdruck von 140 Bar ausgelegt ist, werden die Bronzeringe 16, 17 mit einem geeigneten Klebstoff befestigt; dabei kann es sich um ein unter den Namen XD 911 vertriebenes Produkt der Firma Ciba-Geigy handeln. Die Ränder 20 der Bronzeringe sind abgefast, so daß sie zusammen mit Seitenwänden 21, 22 des Rohres ein Reservoir ausbilden, worin der Klebstoff aufgenommen werden kann. Nachdem der Klebstoff aufgestrichen ist, wird das Rohr in einen Ofen zum Aushärten bei höchstens 200° C eingebracht.

Bei einer anderen Ausführungsform, bei der Zylinder für einen Arbeitsdruck von 240 Bar ausgelegt ist, werden die Bronzeringe 16, 17 durch Hartlötung befestigt, worauf ein äußeres Rundschleifen erfolgt.

Die Instandsetzung des Zylinders ist einfach, da das Auseinandernehmen leicht vonstatten geht und die einzelnen Rohrstücke 1, 2, 3... 7, 8 ohne Schwierigkeiten austauschbar sind. Sofern der Zylinderboden 1 geklebt ist, wird der Zylinder in eine Induktionsspule oder in einen Kronenbrenner eingebracht und der Boden auf mehr als 200° C erwärmt, wodurch der Klebstoff zersetzt wird, so daß der Boden 1 leicht abgezogen werden kann. Falls der Boden aufgeschraubt und versiegelt ist, wird er ebenfalls erwärmt und kann dann abgeschraubt werden. Ohne Versiegelung kann der Boden direkt abgeschraubt werden. Man kann also den Zylinder auseinandernehmen, ohne daß die inneren Teile beeinflußt werden.

Mit dem erfindungsgemäßen Verfahren ist es also möglich, die erforderlichen Herstellungsstufen bis auf einige wenige einfache Bearbeitungsprozeße zu reduzieren, die mittels herkömmlicher Arbeitsmaschinen und ohne Materialverluste ausgeführt werden können. Das Auseinandernehmen des Teleskopzylinders im Falle einer Instandsetzung ist, wie gesagt, einfach
durchzuführen, und Rohre, die durch Aufreibung beschädigt oder
völlig zerstört sind, kann man schnell ersetzen, indem man
ein entsprechend langes Stück von den vorgefertigten Rohren
schneidet, die man als Lagermaterial vorrätig halten kann.

Patentansprüche:

1. Verfahren zur Herstellung von hydraulischen Teleskopzylindern, die mindestens zwei teleskopisch in einander
   gelagerte Zylinderrohre umfassen und an jedem Ende einen
   Führungsring aufweisen, d a d u r c h   g e k e n n -
   z e i c h n e t ,   daß die einzelnen Rohre (1 bis 8) aus
   vorgefertigten, kaltgezogenen, innen gehonten und außen
   rundgeschliffenen Stahlrohren hergestellt werden, von
   denen man Stücke abschneidet, die darauf an einem Ende
   mit einem äußeren Ring (17) und am anderen mit einem inneren Ring (16) durch einen Befestigungsvorgang versehen
   werden, bei dem die erforderliche Erwärmung unterhalb der
   Deformationsgrenze der Ringe gehalten werden kann.

2. Verfahren nach Anspruch 1,   d a d u r c h   g e k e n n -
   z e i c h n e t ,   daß die Ringe (16, 17) vor der Befestigung mit Ausdrehungen für Abstreif-, Schließ- und Dichtungsringe fertig bearbeitet werden.

3. Verfahren nach Anspruch 1 oder 2,   d a d u r c h   g e -
   k e n n z e i c h n e t ,   daß die Ringe (16, 17) durch
   Kleben befestigt werden.

4. Verfahren nach einem der Ansprüche 1 bis 3,   d a d u r c h
   g e k e n n z e i c h n e t ,   daß die Ringe (16, 17) aus
   Lagermetall bestehen.

**Fig 1**

**Fig 2**